# EUROPÄISCHE PATENTSCHRIFT

(11) **EP 3 273 124 B1**
(45) Veröffentlichungstag und Bekanntmachung des Hinweises auf die Patenterteilung: **02.10.2019**
(21) Anmeldenummer: 17183816.2
(22) Anmeldetag: 05.06.2015
(51) Int. Cl.: F16K 31/122

(54) **VENTILVORRICHTUNG ZUM ANSTEUERN VON MEDIENSTRÖMEN JEDWEDER ART**
VALVE DEVICE FOR CONTROLLING MEDIA FLOWS OF ANY TYPE
DISPOSITIF DE SOUPAPE DESTINÉ À GUIDER DES FLUX DE MILIEUX DE QUELQUE TYPE QUE CE SOIT

(30) Priorität: 13.06.2014 DE 102014008651
(43) Veröffentlichungstag der Anmeldung: 24.01.2018
(62) Teilanmeldung aus: 15729077.6
(73) Patentinhaber: RSG Electronic GmbH, 74653 Ingelfingen (DE)
(72) Erfinder: Eberhard, Ralph, 74653 Ingelfingen (DE)
(74) Vertreter: Bartels und Partner, Patentanwälte

(56) Entgegenhaltungen:
- JP-A- S57 129 980
- US-A1- 2008 290 313
- US-B1- 8 573 245

## Beschreibung

Die Erfindung betrifft eine Ventilvorrichtung zum Ansteuern von Medienströmen jedweder Art mit den Merkmalen im Oberbegriff von Anspruch 1.

Durch die DE 199 01 253 B4 ist eine Ventilvorrichtung in der Art eines Koaxialventils bekannt mit einem Gehäusekörper, der zwischen zwei Medienanschlussstellen in Form eines Einlass- und eines Auslassstutzens angeordnet ist, wobei der Gehäusekörper ein Strangpressprofil ist und wobei zwischen dem Einlassstutzen und dem Strangpressprofil sowie zwischen dem Auslassstutzen und dem Strangpressprofil jeweils eine Dichtung angeordnet ist. In Fortbildung dieser Lösung ist durch die DE 103 49 057 B4 ein Steuerrohr für ein dahingehendes Koaxialventil bekannt mit einem am Steuerrohr angeordneten Ventilschließkörper, wobei das Steuerrohr selbst einen rohrförmigen Abschnitt aufweist, an dessen einer ersten Seite ein Ventilschließkörper angeordnet ist. Dadurch, dass bei der bekannten Lösung die Querschnittsfläche der dem Ventilschließkörper abgewandten Eintrittsöffnung als die eine Medienanschlussstelle des Steuerrohres kleiner ist als die Querschnittsfläche des zwischen der Eintrittsöffnung und dem Ventilschließkörper befindlichen Bereichs, wobei zur Reduzierung der Querschnittsfläche der Eintrittsöffnung eine Blende in das Steuerrohr eingeklebt ist, treten bei der bekannten Ventilvorrichtung keine unerwünschten Strömungsgeräusche im Betrieb derselben auf. Trotz dieses Vorteils der Geräuschminderung im Betrieb der Ventilvorrichtung lässt diese noch Wünsche offen, insbesondere in Bezug auf die Funktionssicherheit, sofern ein hemmnis- und störungsfreier Betrieb gefordert ist. Auch lassen sich sehr schnelle Umschaltvorgänge zwischen dem Herstellen und erneuten Trennen der medienführenden Verbindung zwischen den Anschlussstellen mit der bekannten Lösung nicht ohne Weiteres erreichen, was ursächlich in der Querschnittsverringerung über die in das Steuerrohr eingeklebte Blende begründet ist.

Die US 8 573 245 B1 beschreibt eine gattungsgemäße Ventilvorrichtung zum Ansteuern von Medienströmen jedweder Art mittels mindestens eines Ventilsteuerkolbens, der längsverfahrbar in einem Ventilgehäuse geführt ist und der eine Medienverbindung zwischen mindestens zwei Medienanschlussstellen im Ventilgehäuse ansteuert, von denen zumindest eine ein Druckversorgungseingang und zumindest eine andere ein Verbraucherausgang ist, wobei der Ventilsteuerkolben mittels mindestens einer Ausgleichseinrichtung zumindest bezüglich des am jeweiligen Druckversorgungseingang anstehenden Mediendruckes druckausgeglichen im Ventilgehäuse geführt ist, wobei die Ausgleichseinrichtung ein erstes Dichtmittel aufweist, das den Ventilsteuerkolben auf seiner Mediensteuerseite auf dem gleichen Durchmesser zur Abdichtung bringt wie ein weiteres zweites Dichtmittel der Ausgleichseinrichtung, das auf einer Betätigungsseite des Ventilsteuerkolbens an diesem angreift.

Weitere Ventilvorrichtungen gehen aus der JP S57-129980 und der US 2008/0290313 A1 hervor.

Ausgehend von diesem Stand der Technik liegt daher der Erfindung die Aufgabe zugrunde, eine demgegenüber verbesserte Ventilvorrichtung zu schaffen, die funktionssicher im Betrieb ist und mit der auch zeitlich rasch aufeinanderfolgende Umschaltvorgänge mit dem Ventilsteuerkolben erreicht werden. Diese Aufgabe wird durch eine Ventilvorrichtung mit den Merkmalen des Patentanspruchs 1 in seiner Gesamtheit gelöst. Vorteilhafte Ausführungsformen der Erfindung gehen aus den Unteransprüchen 2 bis 10 hervor.

Gemäß dem kennzeichnenden Teil des Patentanspruches 1 ist vorgesehen, dass der Ventilsteuerkolben in seiner Schließstellung gesehen zumindest zwischen den beiden Dichtmitteln einen bezogen auf seinen gesamten Außenumfang konstanten Außendurchmesser aufweist.

Es ist ferner vorgesehen, dass bei der erfindungsgemäßen Ventilvorrichtung deren Ventilsteuerkolben mittels mindestens einer Ausgleichseinrichtung zumindest bezüglich des am jeweiligen Druckversorgungseingang anstehenden Mediendruckes druckausgeglichen im Ventilgehäuse geführt ist.

Die erfindungsgemäße Lösung hat dadurch unter anderem den Vorteil, dass der am Druckversorgungseingang jeweils herrschende Fluiddruck keine auslenkende Kraft auf den Ventilsteuerkolben derart ausüben kann, dass dieser insbesondere vom Ventilsitz ungewollt abgehoben oder auf diesen mit unzulässig hohem Druck aufgesetzt wird, was die Dichtung in diesem Bereich schädigen könnte. Mithin müssen zum Halten des Ventilsteuerkolbens am Ventilsitz bzw. zum Abheben desselben von diesem gegenüber vergleichbaren Ventilen des Standes der Technik nur geringe Betätigungskräfte aufgewandt werden, so dass die zugeordneten Betätigungseinrichtungen für die Ansteuerung des Ventilsteuerkolbens kleiner dimensioniert werden können. Dadurch, dass der Ventilsteuerkolben erfindungsgemäß in jeder seiner Verfahrstellungen druckausgeglichen im Ventilgehäuse geführt ist, lassen sich sehr schnelle Umschaltvorgänge für das Herbeiführen einer medien- oder fluidführenden Verbindung zwischen den Anschlussstellen herstellen und diese auch wieder voneinander trennen. Auch erlaubt die druckausgeglichene Verfahrweise eine erhöhte Funktionssicherheit, da ein hemmnis- und störungsfreier Betrieb beim Verfahren des Ventilsteuerkolbens auf jeden Fall gewährleistet ist. Darüber hinaus ist die erfindungsgemäße Ventilvorrichtung kostengünstig in der Herstellung.

Die Ausgleichseinrichtung weist ein erstes Dichtmittel auf, das den Ventilsteuerkolben auf seiner Mediensteuerseite auf dem gleichen Durchmesser zur Abdichtung bringt wie ein weiteres zweites Dichtmittel der Ausgleichseinrichtung, das auf einer Betätigungsseite des Ventilsteuerkolbens an diesem angreift. Über das jeweilige Dichtmittel ist nicht nur eine sichere Abdichtung des Ventilsteuerkolbens, insbesondere in seiner Schließstellung erreicht, sondern zumindest über ein Dichtmittel ist auch eine sichere Längsführung für den Ventilsteuerkolben beim Bewegen in eine seiner Öffnungsstellungen gewährleistet.

Der Ventilsteuerkolben weist in seiner Schließstellung gesehen zumindest zwischen den beiden Dichtmitteln einen konstanten Außendurchmesser auf. Ein solcher Ventilsteuerkolben ist besonders einfach herstellbar, da seine Kontur auf der Umfangsseite nicht mit zusätzlichen Absätzen oder Schrägflächen versehen werden muss. Darüber hinaus ist auf diese Weise sichergestellt, dass es keine ungewollten Angriffsflächen für den Fluiddruck weder in axialer, noch in radialer Richtung des Ventilsteuerkolbens gibt. Aufgrund des konstant verlaufenden Außendurchmessers des Ventilsteuerkolbens im Bereich der Medienanschlussstellen kann in seiner geöffneten Stellung das jeweils an ihm angreifende Druckfluid oder Druckmedium gleichförmig und kräftefrei um seine Außenumfangsfläche herumgeführt werden. Dieser kräftefreie Betrieb hat so keine Entsprechung im Stand der Technik. Zur Ansteuerung der vorzugsweise pneumatisch arbeitenden Betätigungseinrichtung können handelsübliche Pilotventile eingesetzt werden, beispielsweise auch solche, die einem Standard des Normenausschusses Mess- und Regelungstechnik der chemischen Industrie (NAMUR) entsprechen.

Besonders vorteilhaft ist der Ventilsteuerkolben als Hohlkoben konzipiert, dessen Hohlraum koaxial in den Verbraucherausgang mündet. Weiter bevorzugt ist der Hohlkolben in Richtung seiner Betätigungsseite mit mindestens einer, vorzugsweise als Dämpfungsbohrung ausgebildeten, Durchlassstelle versehen, die den Hohlraum des Hohlkolbens permanent medienführend mit einem Ausgleichsraum des Ventilgehäuses verbindet, in den der Ventilsteuerkolben einfahrbar im Ventilgehäuse geführt ist. Da der Hohlraum des genannten Hohlkolbens innenumfangsseitig gleichfalls zylindrisch ausgebildet ist, greift das jeweils zwischen den Medienanschlussstellen geführte Fluid gleichmäßig am Hohlkolben an und unterstützt den gewünschten druckausgeglichenen Betrieb bei dem Bewegen des Ventilsteuerkolbens. Durch die jeweilige Dämpfungsbohrung ist eine hydraulische Schließdämpfung für den Ventilsteuerkolben erreicht, so dass hydraulische Druckschläge beim Betrieb der Ventilvorrichtung mit Sicherheit verhindert sind.

Weiterhin kann eine Druckentlastungseinrichtung in dem Ventilgehäuse zwischen dem Ausgleichsraum und der Umgebung des Ventiles vorgesehen sein. Über die dahingehende Druckentlastungseinrichtung in Form einer Ausgleichsleitung können auch etwaige Leckagemengen aus dem Ventilgehäuse abgeführt werden.

Das Ventilgehäuse ist bevorzugt in Patronen- oder sogenannter Cartridge-Bauweise ausgeführt und in einen Ventilblock in wieder lösbarer Weise einsetzbar und in der eingesetzten Stellung sind die Medienanschlussstellen des Ventilgehäuses und die Medienanschlussstellen des Ventilblockes fluidführend miteinander verbunden. Die in dieser Bauweise ausgeführten Ventile sind besonders leicht austauschbar und damit flexibel einsetzbar. Ferner lassen sich Komponenten der Ventilvorrichtung sowie die Ventilvorrichtung selbst im Störungs- oder Reparaturfall rasch gegen Neuteile oder neue Ventilvorrichtungen austauschen.

Weiterhin kann am Ventilsteuerkolben ein Ringmagnet angeordnet sein, der mit einem Magnetfeldsensor zusammenwirkt. Auf diese Weise wird ein Endschalter gebildet. Mit diesem lässt sich die jeweilige Position des Ventilsteuerkolbens für Ansteuervorgänge in einer Rechnereinheit oder dergleichen auswerten.

Die Erfindung ist nachfolgend anhand von einem in den Figuren dargestellten Ausführungsbeispiel näher erläutert. Es zeigen in prinzipieller und nicht maßstäblicher Darstellung:
- Fig. 1 und 2: eine erfindungsgemäße Ventilvorrichtung in einer perspektivischen Schrägansicht von unten bzw. in einer Draufsicht;
- Fig. 3: eine Seitenansicht auf die Ventilvorrichtung nach der Fig. 1;
- Fig. 4: einen Querschnitt durch die Ventilvorrichtung entlang der Linie A-A in Fig. 3; und
- Fig. 5: einen Querschnitt durch die Ventilvorrichtung entlang der Linie B-B in Fig. 4.

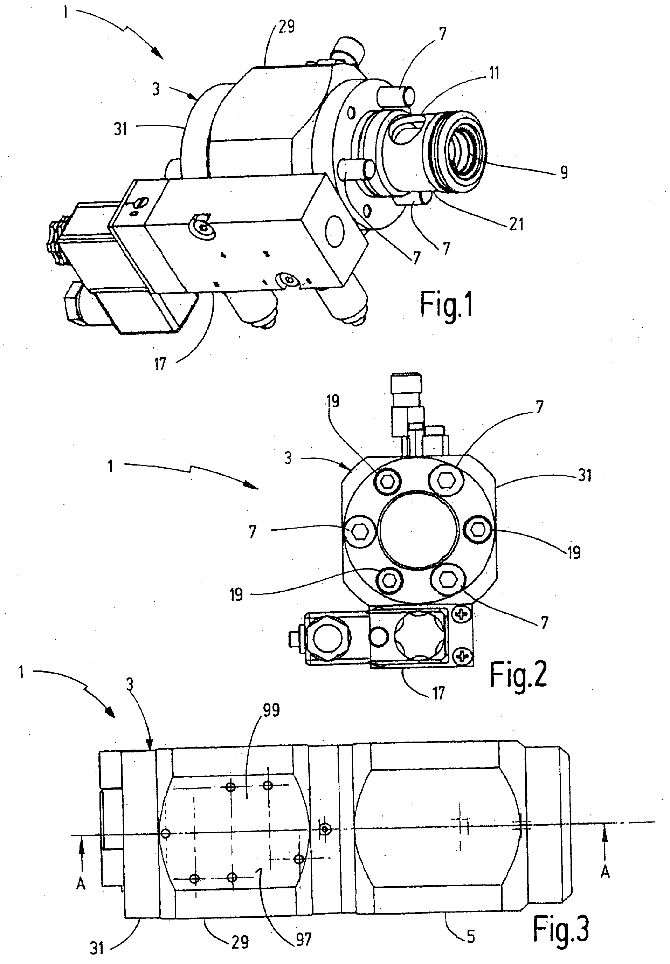

In den Fig. 1 bis 5 ist eine erfindungsgemäße Ventilvorrichtung 1 zum Ansteuern von Medienströmen jedweder Art gezeigt. Die Ventilvorrichtung 1 ist in Patronen- oder Cartridge-Bauweise ausgeführt und weist ein insbesondere mehrteilig ausgebildetes Ventilgehäuse 3 auf, das an einem Ventilblock 5 mit drei Befestigungsmitteln 7, beispielsweise in Form von Schrauben, befestigbar ist. Das Ventilgehäuse 3 weist eine axiale Medienanschlussstelle 9 und zwei hierzu quer verlaufende, radiale Bohrungen als gemeinsame radiale Medienanschlussstelle 11 auf. Im Rahmen der Erfindung kann jede der Medienanschlussstellen 9 oder 11 der Druckversorgungseingang P sein, wobei dann die jeweils andere Medienanschlussstelle 11 bzw. 9 ein Verbraucherausgang A ist. Im dargestellten Fall ist die Anschlussstelle 11 der Druckversorgungseingang P, und die Anschlussstelle 9 entspricht dem Verbraucheranschluss A. In der eingesetzten Stellung des Ventilgehäuses 3 in den Ventilblock 5 sind die Medienanschlussstellen 9, 11 des Ventilgehäuses 3 mit korrespondierend angeordneten Medienanschlussstellen 15 bzw. 13 des Ventilblocks 5 fluidführend verbunden.

Seitlich am Ventilgehäuse 3 ist ein Pilotventil 17 in Form eines sog. 5/2-Wege-NAMUR-Ventils in Quaderbauform angeordnet. Ferner sind weitere Befestigungsmittel 19, insbesondere in Form von Schrauben vorgesehen, um die verschiedenen Teile 21, 23, 25, 27, 29 und 31 des Ventilgehäuses 3 miteinander zu verbinden. So weist das Ventilgehäuse 3 ein Ventilgehäuseunterteil 21, ein Halteteil 23, ein Steuerraumgehäuse 25, ein Zwischenteil 27, ein Ventilgehäuseoberteil 29 sowie ein Deckelteil 31 auf. Die weiteren Befestigungsmittel 19 zur zumindest teilweisen Verbindung der genannten Teile 21 bis 31 des Ventilgehäuses 3 untereinander und die ersten Befestigungsmittel 7 zur Befestigung des Ventilgehäuses 3 im Ventilblock 5 sind auf einem Kreisbogen versetzt zueinander abwechselnd angeordnet, wie dies insbesondere in der Draufsicht gemäß Fig. 2 zu sehen ist. Ferner unterscheiden sich die weiteren Befestigungsmittel 19 und die ersten Befestigungsmittel 7 hinsichtlich ihrer Länge und ihres Durchmessers, um eine Verwechslung der Befestigungsmittel bei deren Festlegen ausschließen zu können.

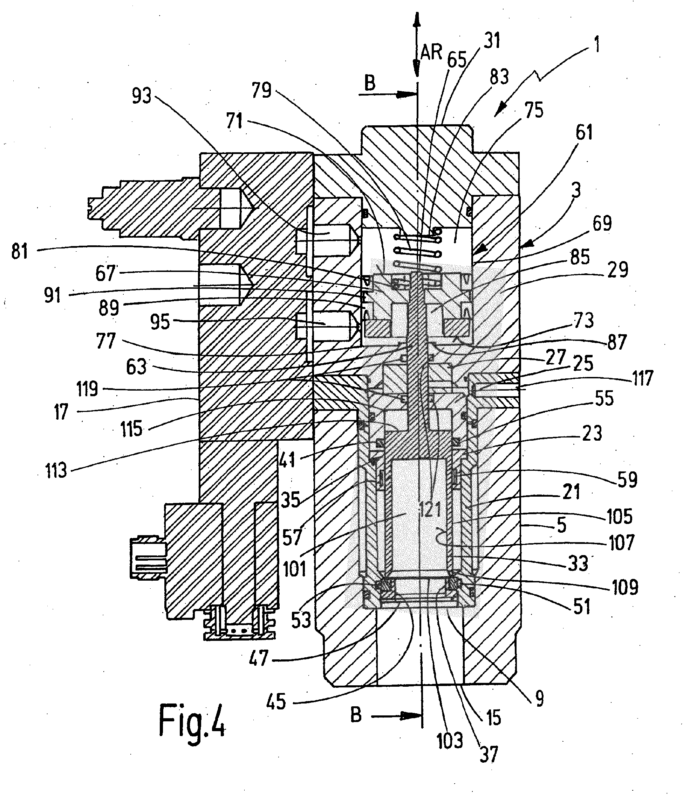

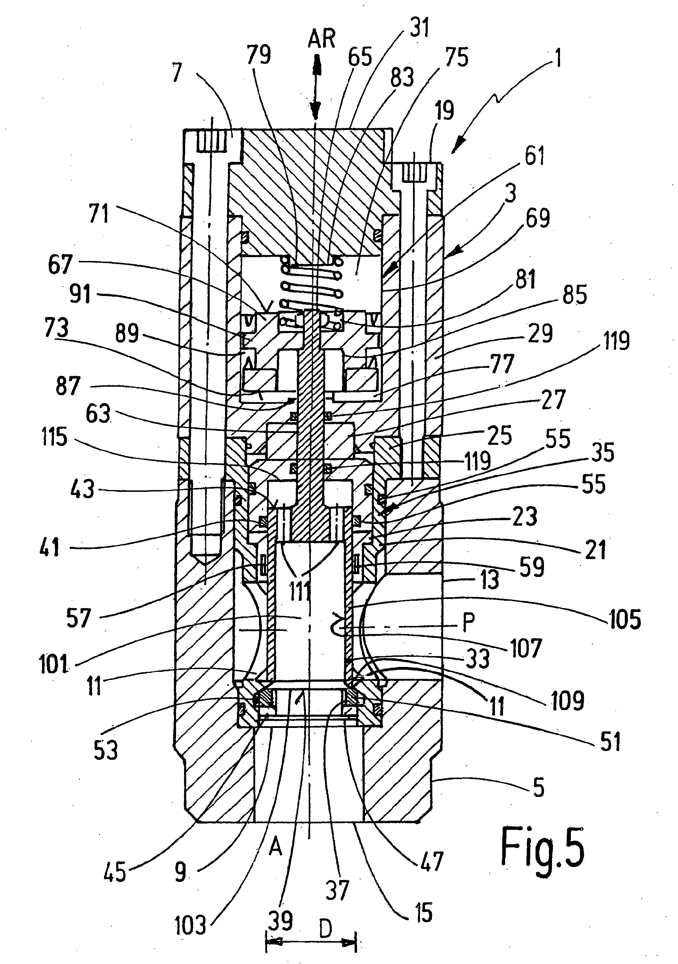

Wie die Fig. 4 und 5 weiter zeigen, ist ein Ventilsteuerkolben 33 vorgesehen, der längsverfahrbar in Teilen des Ventilgehäuses 3 geführt ist und der eine Medienverbindung zwischen den beiden Medienanschlussstellen 9, 11 im Ventilgehäuse 3 ansteuert, von denen die eine im vorliegenden Fall, wie bereits dargelegt, als Druckversorgungseingang P und die andere als Verbraucherausgang A festgelegt ist.

Erfindungsgemäß ist der Ventilsteuerkolben 33 mittels mindestens einer als Ganzes mit 35 bezeichneten Ausgleichseinrichtung zumindest bezüglich des am jeweiligen Druckversorgungseingang P anstehenden Mediendrucks in jeder Verfahrstellung druckausgeglichen im Ventilgehäuse 3 geführt. Die Ausgleichseinrichtung 35 weist dabei unter anderem ein erstes Dichtmittel 37 auf, das den Ventilsteuerkolben 33 auf seiner Mediensteuerseite 39 auf den gleichen Durchmesser D zur Abdichtung bringt wie ein weiteres zweites Dichtmittel 41 der Ausgleichseinrichtung 35, das auf der Betätigungsseite 43 des Ventilsteuerkolbens 33 an diesem angreift. Insoweit weist der Ventilsteuerkolben 33 bezogen auf seinen Außenumfang einen gleichen Durchmesser D auf, der zumindest in seiner in den Fig. 4 und 5 gezeigten Schließstellung über eine vorgebbare axiale Länge zwischen den beiden Dichtmitteln 37, 41 verläuft, vorzugsweise darüber nach oben betrachtet hinausreicht.

Das erste Dichtmittel 37 ist eine im Bereich des Verbraucherausgangs A angeordnete, ringförmige Weichdichtung, gegen die der Ventilsteuerkolben 33 unter Einnahme seiner Schließstellung in stirnseitige Anlage gerät. Die Weichdichtung 37 ist von einem im Querschnitt gesehen L-förmigen Haltering 45 gehalten, der wiederum durch einen Sicherungsring 47 im Ventilgehäuse 3 in seiner Einbaulage gesichert ist. Die Befestigung der Weichdichtung 37 durch Haltering 45 und Sicherungsring 47 ermöglicht es, die Weichdichtung 37 im Bedarfsfall, insbesondere bei Verschleiß, besonders schnell gegen eine neue Dichtung austauschen zu können. Die Weichdichtung 37 wird auf ihrer Außenumfangsseite zusätzlich durch eine O-RingDichtung 51 abgedichtet, die in einer Nut 53 des Ventilgehäuses 3 aufgenommen ist. Das weitere Dichtmittel 41 ist ebenfalls in der Form eines O-Ringes ausgeführt, der den Ventilsteuerkolben 33 auf seiner rückwärtigen Betätigungsseite 43 vollständig umfasst und in einer Ausnehmung 55 des im Querschnitt gesehen topfförmig ausgebildeten Steuerraumgehäuses 25 angeordnet ist, welches durch das im Querschnitt gesehen weitere L-förmige Halteteil 23 in seiner Position als Teil des Ventilgehäuses 3 in diesem gehalten ist.

Das Halteteil 23 weist ein weiteres drittes ringförmiges Dichtelement 57 auf, das in einer Innenumfangsnut 59 des Halteteils 23 angeordnet ist. Das dahingehende Halteteil 23 mit Dichtelement 57 stützt gleichfalls den Ventilsteuerkolben 33 ab und hält diesen als weiteren Teil der Ausgleichseinrichtung im Verfahrbetrieb mit kräftefrei. Der Ventilsteuerkolben 33 weist in seiner Schließstellung, die in den Fig. 4 und 5 gezeigt ist, somit zwischen den beiden Dichtmitteln 37, 41 und im rückwärtigen Bereich mit einem vorgebbaren Überstand über das Dichtmittel 41 hinausragend einen konstanten Außendurchmesser D auf. Auf diese Weise ist der Ventilsteuerkolben 33 bezüglich des seitlichen Medienanschlusses 11 in jedem Fall druckausgeglichen, so dass ein im Betrieb zwischen den Anschlüssen 9, 11 entstehender Druckunterschied, der eine axiale und/oder radiale Kraft auf den Ventilsteuerkolben 33 ausübt, an diesem nicht seine Lage verstellend wirksam werden kann. Dergestalt ist ein hemmnisfreier, kräfteausgeglichener Betrieb für den Ventilkolben 33 in jeder seiner möglichen Verfahrstellungen erreicht.

Der Ventilsteuerkolben 33 ist auf seiner rückwärtigen Ansteuer- oder Betätigungsseite 43 mittels einer, vorzugsweise über das Pilotventil 17, pneumatisch betriebenen Betätigungseinrichtung 61 ansteuerbar. Hierzu weist der Ventilsteuerkolben 33 auf seiner dahingehenden Betätigungsseite 43 eine einstückig mit ihm verbundene Ventilstange 63 auf, an deren freien Ende 65 ein Betätigungskolben 67 festgelegt ist. Der Betätigungskolben 67 ist in einem Hohlraum 69 des Ventilgehäuseoberteils 29 auf dessen Innenseite axial verschiebbar aufgenommen. Auf diese Weise werden auf axial gegenüberliegenden Seiten 71, 73 des Betätigungskolbens 67 zwei Druckkammern 75 bzw. 77 mit im Betrieb unterschiedlichen Druckniveaus ausgebildet, durch die der Betätigungskolben 67 und damit auch der Ventilsteuerkolben 33 pneumatisch in beiden axialen Richtungen AR verfahrbar sind.

Darüber hinaus ist ein Energiespeicher 79 in Form einer Druckfeder vorgesehen, die in eine Ausnehmung 81 des Betätigungskolbens 67 auf dessen Oberseite ragt und diesen in einer Richtung beaufschlagt, dass der Betätigungskolben 67 auf die Ventilstange 63 gegen einen Absatz derselben gedrückt ist. Der Energiespeicher 79 stützt sich im vorliegend gezeigten Ausführungsbeispiel an dem Deckelteil 31 ab und ist dort durch einen in das andere freie Federende eingreifenden Vorsprung 83 geführt. Der Ventilsteuerkolben 33 ist in seiner Normalstellung, bei der keine pneumatischen Betätigungskräfte über das Pilotventil 17 auf diesen einzuwirken brauchen, mittels der Federkraft des Energiespeichers 79 in der Schließstellung gehalten. Diese Normalstellung wird auch fachsprachlich als "normally closed" bezeichnet. Es ist aber auch grundsätzlich möglich, bei einer nicht dargestellten Ausführungsform der erfindungsgemäßen Ventillösung den Energiespeicher 79 auf der gegenüberliegenden Seite des Betätigungskolbens 67 angreifen zu lassen. Im dahingehenden Fall würde dann die Ventilvorrichtung 1 als Normalstellung ihre nicht gezeigte federbelastete Offenstellung einnehmen und das Pilotventil 17 müsste dann mittels der Betätigungseinrichtung 61 pneumatisch entsprechend den Schließvorgang vornehmen.

Die Ventilstange 63 durchgreift eine Ausnehmung 85 im Betätigungskolben 67 und ist über einen im Ventilgehäuseoberteil 29 angeordneten, nach innen vorstehenden Vorsprung 87 zusätzlich geführt. Der Betätigungskolben 67 ist wiederum durch eine Umfangsdichtung 89 gegenüber dem Ventilgehäuseoberteil 29 in seinen beiden gegenläufigen Verfahrrichtungen AR abgedichtet und zur endseitigen Befestigung der dahingehenden Umfangsdichtung 89 weist der Betätigungskolben 67 einen ringartigen Vorsprung 91 in seiner Mitte auf.

Die beiden genannten Druckkammern 75, 77 im Ventilgehäuseoberteil 29 sind über Druckanschlussstellen 93, 95, die auf einer Außenseite 97 (Fig. 3) des Ventilgehäuseoberteils 29 ausmünden, an das Pilotventil 17 medienführend angeschlossen. An dieser Außenseite 97 des Ventilgehäuseoberteils 29 ist ein genormtes Anschlussstellenbild 99 für das NAMUR-Pilotventil 17, insbesondere in Form eines 5/2-Wegeventils, vorgesehen. Die Anordnung ist derart gewählt, dass das NAMUR-Ventil 17 auch um 180° gedreht am Ventilgehäuseoberteil 29 befestigt werden kann, was auf besonders einfache Weise eine Umkehrung der Betätigungsrichtung der Ventilvorrichtung 1 im Bedarfsfall erlaubt, sofern der Energiespeicher 79 seine nicht näher dargestellte, aber beschriebene zweite mögliche Einbaulage einnimmt.

Der Ventilsteuerkolben 33 ist insgesamt als Hohlkolben konzipiert, dessen Hohlraum 101 koaxial in den Verbraucherausgang A ausmündet. Am freien Ende 103 des Ventilsteuerkolbens 33 weist die Wand 105 des Ventilsteuerkolbens 33 und von der Hohlraumseite 107 abgewandt eine im Querschnitt gesehen dreieckförmige Dichtkante 109 auf, die bei gleichbleibendem Außendurchmesser D des Hohlkolbens 33 den Innendurchmesser desselben in diesem Bereich vergrößert, damit der Ventilsteuerkolben 33 an seinem freien Ende linienförmig an der Weichdichtung 37 in seiner Schließstellung zur Anlage kommt. Diese Abdichtung erfolgt somit auf einer dem Außendurchmesser D des Ventilsteuerkolbens 33 entsprechenden Außenumfangslinie.

Der Hohlraum 33 ist in Richtung seiner Betätigungsseite 43 mit mindestens zwei als Dämpfungsbohrungen ausgebildeten Durchlassstellen 111 (Fig. 5) als Bestandteil der Ausgleichseinrichtung 35 versehen. Diese Dämpfungsbohrungen 111 sind in einem Boden 113 des Ventilsteuerkolbens 33 vorgesehen, der den einstückigen Übergang zwischen Hohlkolben 33 und Ventilstange 63 herstellt. Auf diese Weise ist der Hohlraum 101 des Hohlkolbens 33 permanent medienführend mit einem Ausgleichsraum 115 des Ventilgehäuses 3 verbunden, in den der Ventilsteuerkolben 33 einfahrbar im Ventilgehäuse 3, ausgehend von seiner Schließstellung, in einer seiner Öffnungsstellungen geführt ist. Die Durchlassstellen 111 bewirken dabei einen langsamen Druckausgleich im Sinne einer Dämpfung für die Bewegung des Ventilsteuerkolbens 33 hinsichtlich des an der axialen Medienanschlussstelle 9 anstehenden Fluiddrucks in Richtung geschlossenes Ventil. Die Durchgangsbohrungen 111 können je nach Gestaltung der Ventilvorrichtung 1 unterschiedliche Durchmesser aufweisen, wobei je kleiner der Durchmesser gewählt ist, umso stärker die Androsselung des Medienstroms über den Boden 113. Insbesondere lässt sich hierdurch eine hydraulische Schließdämpfung für die Ventilvorrichtung 1 erreichen.

Weiterhin ist in dem Ventilgehäuse 3 mindestens eine dasselbe durchgreifende Druckentlastungs- oder Leckageleitung 117 vorgesehen. Die jeweilige Leitung 117 durchgreift das Ventilgehäuseunterteil 21 und das Zwischenteil 27 und grenzt an die Ventilstange 63 des Ventilsteuerkolbens 33 zwischen zwei gegenüberliegenden O-Ring-Dichtungen 119 an, die in zuordenbaren Ausnehmungen 121 des Ventilgehäuseoberteils 29 und des Steuerraumgehäuses 25 angeordnet sind. Diese O-Ring-Dichtungen 119 werden durch das Zwischenteil 27 in ihrer jeweiligen Ausnehmung 121 in Position gehalten und etwaige Leckagen im Betrieb des Ventils, die von diesen Dichtungen nicht aufgefangen werden, können über die Leitung 117 aus dem Ventilgehäuse 3 abfließen.

Die erfindungsgemäße Ventilvorrichtung 1 hat den Vorteil, dass Veränderungen des Fluiddrucks am Druckversorgungseingang P oder am Nutz- oder Verbraucheranschluss A in jeder Verfahrstellung des Ventilsteuerkolbens 33 keine wirksamen Querkräfte auf den Ventilsteuerkolben 33 ausüben können, die ansonsten dazu führen können, dass dieser vom Ventilsitz 37 ungewollt abgehoben oder auf diesen mit zu hohen Schließkräften beim Schließvorgang aufgesetzt wird. Mithin müssen zum Halten des Ventilsteuerkolbens 33 am Ventilsitz 37 oder zum Abheben desselben vom Ventilsteuersitz 37 geringere Kräfte als bei vergleichbaren Ventilen des Standes der Technik aufgewandt werden. Auf diese Weise kann eine Betätigungseinrichtung 61 vorgesehen werden, die nur geringe Ansteuerkräfte auf den Ventilsteuerkolben 33 auszuüben braucht. Weiterhin ist der Ventilsteuerkolben 33 in Richtung der Betätigungsseite 43 mit als Dämpfungsbohrungen dienenden Durchlassstellen 111 versehen, so dass der Ventilsteuerkolben 33 auch bezüglich des koaxialen Medienanschlusses 9 druckausgeglichen und in dämpfender Weise in seine die Anschlussstellen 9 und 11 voneinander trennende Verfahrstellung gebracht werden kann. Insoweit braucht zur Betätigung des Ventilsteuerkolbens 33 nur ein Betätigungskolben 67 vorgesehen werden, anstelle mehrerer in Reihe geschalteter Antriebskolben, wie bei bekannten Ventilen teilweise üblich.

Durch den kompakten Aufbau der Ventilvorrichtung 1 kann bei ähnlicher Baugröße zumindest die jeweils nächstgrößere Nenngröße auf jeden Fall mit abgedeckt werden. Auf diese Weise können mit nur einer Konstruktion bis zu sechs verschiedene Ausbauvarianten mit abgedeckt werden, so dass die Ventilvorrichtung 1 die Realisierung einer großen Variantenvielfalt im Sinne eines Baukastensystems ermöglicht.

## Patentansprüche

1. Ventilvorrichtung zum Ansteuern von Medienströmen jedweder Art mittels mindestens eines Ventilsteuerkolbens (33), der längsverfahrbar in einem Ventilgehäuse (3) geführt ist und der eine Medienverbindung zwischen mindestens zwei Medienanschlussstellen (9, 11) im Ventilgehäuse (3) ansteuert, von denen zumindest eine ein Druckversorgungseingang (P) und zumindest eine andere ein Verbraucherausgang (A) ist, wobei der Ventilsteuerkolben (33) mittels mindestens einer Ausgleichseinrichtung (35) zumindest bezüglich des am jeweiligen Druckversorgungseingang (P) anstehenden Mediendruckes druckausgeglichen im Ventilgehäuse (3) geführt ist, wobei die Ausgleichseinrichtung (35) ein erstes Dichtmittel (37) aufweist, das den Ventilsteuerkolben (33) auf seiner Mediensteuerseite (39) auf dem gleichen Durchmesser (D) zur Abdichtung bringt wie ein weiteres zweites Dichtmittel (41) der Ausgleichseinrichtung (35), das auf einer Betätigungsseite (43) des Ventilsteuerkolbens (33) an diesem angreift, **dadurch gekennzeichnet, dass** der Ventilsteuerkolben (33) in seiner Schließstellung gesehen zumindest zwischen den beiden Dichtmitteln (37, 41) einen bezogen auf seinen gesamten Außenumfang konstanten Außendurchmesser (D) aufweist.

2. Ventilvorrichtung nach Anspruch 1, **dadurch gekennzeichnet, dass** das erste Dichtmittel (37) eine im Bereich des Verbraucherausganges angeordnete, ringförmige Weichdichtung ist, gegen die der Ventilsteuerkolben (33) in seiner Schließstellung in stirnseitige Anlage gerät, und dass das zweite Dichtmittel (41) in der Form eines O-Ringes den Ventilsteuerkolben (33) auf seiner Betätigungsseite (43) vollständig umfasst.

3. Ventilvorrichtung nach Anspruch 1 oder 2, **dadurch gekennzeichnet, dass** der Ventilsteuerkolben (33) auf seiner Betätigungsseite (43) mittels einer pneumatischen Betätigungseinrichtung (61) ansteuerbar ist.

4. Ventilvorrichtung nach einem der vorstehenden Ansprüche, **dadurch gekennzeichnet, dass** der Ventilsteuerkolben (33) als Hohlkolben konzipiert ist, dessen Hohlraum (101) koaxial in den Verbraucherausgang (A) ausmündet.

5. Ventilvorrichtung nach Anspruch 4, **dadurch gekennzeichnet, dass** der Hohlkolben (33) in Richtung seiner Betätigungsseite (43) mit mindestens einer, vorzugsweise als Dämpfungsbohrung, ausgebildeten, Durchlassstelle (111) als Bestandteil der Ausgleichseinrichtung versehen ist, die den Hohlraum (101) des Hohlkolbens (33) permanent medienführend mit einem Ausgleichsraum (115) des Ventilgehäuses (3) verbindet, in den der Ventilsteuerkolben (33) einfahrbar im Ventilgehäuse (3) geführt ist.

6. Ventilvorrichtung nach Anspruch 5, **dadurch gekennzeichnet, dass** eine Druckentlastungseinrichtung (117) in dem Ventilgehäuse (3) angeordnet den Ausgleichsraum (115) permanent mit der Umgebung verbindet.

7. Ventilvorrichtung nach einem der vorstehenden Ansprüche, **dadurch gekennzeichnet, dass** das Ventilgehäuse (3) in Patronen- oder Cartridge-Bauweise ausgeführt und in einen Ventilblock (5) in wieder lösbarer Weise einsetzbar ist und dass in der eingesetzten Stellung die Medienanschlussstellen (9, 11) des Ventilgehäuses (3) und die Medienanschlussstellen (13, 15) des Ventilblockes (5) fluidführend miteinander verbunden sind.

8. Ventilvorrichtung nach einem der vorstehenden Ansprüche, **dadurch gekennzeichnet, dass** das Ventilgehäuse (3) mehrteilig ausgebildet ist und die Teile (21, 23, 25, 27, 29, 31) des Ventilgehäuses (3) über zumindest ein erstes Befestigungsmittel (19) miteinander verbunden sind, das sich von zumindest einem weiteren Befestigungsmittel (7) unterscheidet, mit dem das Ventilgehäuse (3) im Ventilblock (5) festlegbar ist.

## Claims

1. Valve device for control of media streams of any nature by means of at least one valve control piston (33), which is longitudinally displaceable while guided in a valve housing (3) and which controls a media connection between at least two media connection points (9, 11) in the valve housing (3), of which at least one is a pressure supply inlet (P) and at least another is a consumer outlet (A), wherein the valve control piston (33) is guided by means of at least one compensating device (35) at least relative to the media pressure at the respective pressure supply inlet (P) with pressure balance in the valve housing (3), wherein the compensating device (35) has a first sealing means (37), which brings the valve control piston (33) on its media control side (39) to the same diameter (D) for sealing as a further second sealing means (41) of the compensating device (35), which engages this on an actuating side (43) of the valve control piston (33), **characterised in that** the valve control piston (33) when viewed in its closed position has a constant outside diameter (D) in relation to its at least its entire external periphery between the two sealing means (37, 41).

2. Valve device in accordance with claim 1, **characterised in that** the first sealing means (37) is a soft ring-shaped seal located in the area of the consumer outlet, against which the valve control piston (33) in its closed position comes into end face contact, and that the second sealing means (41) in the form of an O-ring completely surrounds the valve control piston (33) on its actuation side (43).

3. Valve device in accordance with claim 1 or 2, **characterised in that** the valve control piston (33) can be controlled on its actuation side (43) by means of a pneumatic actuation device (61).

4. Valve device in accordance with one of the preceding claims, **characterised in that** the valve control piston (33) is designed as a hollow piston, whose cavity (101) opens out coaxially into the consumer outlet (A).

5. Valve device in accordance with claim 4, **characterised in that** the hollow piston (33) is provided in the direction of its actuating side (43) with at least one passage point (111), preferably designed as damping bore as constituent of the compensating device, which forms a permanent media-carrying connection the cavity (101) of the hollow piston (33) and a compensation chamber (115) of the valve housing (3), in which the valve control piston (33) is guided retractably in the valve housing (3).

6. Valve device in accordance with claim 5, **characterised in that** a pressure relief device (117) located in the valve housing (3) permanently connects the compensation chamber (115) with the environment.

7. Valve device in accordance with one of the preceding claims, **characterised in that** the valve housing (3) is formed as a cartridge and can be inserted in a valve block (5) in a detachable manner and that, when inserted, the media connection points (9, 11) of the valve housing (3) and the media connection points (13, 15) of the valve block (5) are connected together for fluid passage.

8. Valve device in accordance with one of the preceding claims, **characterised in that** the valve housing (3) is formed in several parts and the parts (21, 23, 25, 27, 29, 31) of the valve housing (3) are joined together by means of at least a first fastening means (19), that differs from at least a further fastening means (7), with which the valve housing (3) can be fastened in the valve block (5).

## Revendications

1. Système de soupape pour commander des courants de fluide de quelque type que ce soit, au moyen d'au moins un piston (33) de commande de soupape, qui est guidé, avec possibilité de se déplacer longitudinalement, dans un corps (3) de soupape et qui commande une liaison de fluide entre au moins deux points (9, 11) de raccord de fluide du corps (3) de la soupape, dont l'un au moins est une entrée (P) d'alimentation en pression et dont au moins un autre est une sortie (A) de consommateur, le piston (33) de commande de soupape étant, au moyen d'au moins un dispositif (35) de compensation, guidé dans le corps (3) de la soupape de manière à égaliser la pression au moins en ce qui concerne la pression du fluide se trouvant à l'entrée (P) d'alimentation en pression, le dispositif (35) de compensation ayant un premier moyen (37) d'étanchéité, qui met le piston (33) de commande de la soupape sur son côté (39) de commande de fluide avec étanchéité sur le même diamètre (D) qu'un autre deuxième moyen (41) d'étanchéité du dispositif (35) de compensation, qui, sur un côté (43) d'actionnement du piston (33) de commande de la soupape, attaque celui-ci,
**caractérisé en ce que** le piston (33) de commande de la soupape a, considéré dans sa position de fermeture, un diamètre (D) extérieur constant, rapporté à tout son pourtour extérieur, au moins entre les deux moyens (37, 41) d'étanchéité.

2. Système de soupape suivant la revendication 1, **caractérisé en ce que** le premier moyen (37) d'étanchéité est une étanchéité souple annulaire, disposée dans la région de la sortie de consommateur, étanchéité sur laquelle le piston (33) de commande de la soupape vient en contact du côté frontal dans sa position de fermeture et **en ce que** le deuxième moyen (41) d'étanchéité, sous la forme d'un joint torique, entoure complètement le piston (33) de commande de la soupape sur son côté (43) d'actionnement.

3. Système de soupape suivant la revendication 1 ou 2, **caractérisé en ce que** le piston (33) de commande de la soupape peut, sur son côté (43) d'actionnement, être commandé au moyen d'un dispositif (61) pneumatique d'actionnement.

4. Système de soupape suivant l'une des revendications précédentes, **caractérisé en ce que** le piston (33) de commande de la soupape est conçu sous la forme d'un piston creux, dont la cavité (101) débouche coaxialement dans la sortie (A) de consommateur.

5. Système de soupape suivant la revendication 4, **caractérisé en ce que** le piston (33) creux est pourvu, dans la direction de son côté (43) d'actionnement, d'au moins un point (111) de passage, constitué de préférence sous la forme d'un trou d'amortissement, en tant que partie constitutive du dispositif de compensation, qui met la cavité (101) du piston (33) creux en communication permanente de conduite de fluide avec un espace (115) de compensation du corps (3) de la soupape, dans lequel le piston (33) de commande de la soupape est guidé avec possibilité d'être introduit dans le corps (3) de la soupape.

6. Système de soupape suivant la revendication 5, **caractérisé en ce qu'**un dispositif (117) de détente de la pression, disposé dans le corps (3) de la soupape, met l'espace (115) de compensation en communication en permanence avec l'atmosphère extérieure.

7. Système de soupape suivant l'une des revendications précédentes, **caractérisé en ce que** le corps (3) de la soupape est réalisé en mode de construction en cartouche ou cartridge et peut être inséré d'une manière redétachable dans un bloc (5) de soupape et **en ce que**, dans la position insérée, les points (9, 11) de raccord de fluide du corps (3) de la soupape et les points (13, 15) de raccord de fluide du bloc (5) de la soupape communiquent fluidiquement entre eux.

8. Système de soupape suivant l'une des revendications précédentes, **caractérisé en ce que** le corps (3) de la soupape est constitué en plusieurs parties et les parties (21, 23, 25, 27, 29, 31) du corps (3) de la soupape sont assemblés entre elles par au moins un premier moyen (19) de fixation, qui se distingue d'au moins un autre moyen (7) de fixation, par lequel le corps (3) de la soupape peut être fixé dans le bloc (5) de soupape.
